(19) **Europäisches Patentamt**

**European Patent Office**

**Office européen des brevets**

(11) **EP 0 547 430 B1**

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.6: **C08F 220/12**

(21) Anmeldenummer: **92120527.4**

(22) Anmeldetag: **02.12.1992**

(54) **Wässrige Polymerisatdispersion**

Aqueous polymer dispersions

Dispersions aqueuses de polymères

(84) Benannte Vertragsstaaten:
**DE ES FR GB IT NL**

(30) Priorität: **18.12.1991 DE 4141760**

(43) Veröffentlichungstag der Anmeldung:
**23.06.1993 Patentblatt 1993/25**

(73) Patentinhaber: **BASF Aktiengesellschaft
D-67063 Ludwigshafen (DE)**

(72) Erfinder:
- **Schmidt-Thuemmes, Jürgen, Dr.
W-6708 Neuhofen (DE)**
- **Eckert, Günter, Dr.
W-6703 Limburgerhof (DE)**

(56) Entgegenhaltungen:
**GB-A- 1 029 318**    **US-A- 3 057 812**
**US-A- 4 189 561**

## Beschreibung

Die vorliegende Erfindung betrifft eine wäßrige Polymerisatdispersion, dadurch erhältlich, daß man eine Mischung A radikalisch polymerisierbarer Monomerer, bestehend aus

a) 65 bis 99 Gew.%    wenigstens einer Monomerenmischung a, die ihrerseits aus

50 bis 95 Gew.-%    wenigstens eines Esters aus der Gruppe umfassend die Ester der Acryl- und Methacrylsäure mit 1 bis 8 C-Atome enthaltenden Alkanolen, ausschließlich 2-Ethylhexylacrylat, und

5 bis 50 Gew.-%    2-Ethylhexylacrylat zusammengesetzt ist,

b) 1 bis 10 Gew.-%    wenigstens eines Monomeren aus der Gruppe umfassend 3 bis 8 C-Atome aufweisende $\alpha,\beta$-monoethylenisch ungesättigte Mono- und Dicarbonsäuren, deren Anhydride und deren Mono- sowie Diamide (Monomere b) und

c) 0 bis 25 Gew.-%    sonstigen radikalisch copolymerisierbaren Monomeren (Monomere c),

nach der Methode der radikalischen wäßrigen Emulsionspolymerisation mit der Maßgabe polymerisiert, daß die Polymerisationstemperatur im Bereich $\geq 0$ bis $\leq 50°C$ liegt und die Zusammensetzung der Monomerenmischung A so gewählt wird, daß ein nur aus den darin enthaltenen Monomeren a und c in polymerisierter Form aufgebautes Polymerisat eine Glasübergangstemperatur im Bereich $\leq 0$ bis $\geq -30°C$ aufweisen würde.

Außerdem betrifft die Erfindung das Verfahren zur Herstellung dieser Dispersion sowie deren Verwendung als Bindemittel, insbesondere für Schutzschichten auf Leder.

Aus der DE-A 2 726 806 sind wäßrige Polymerisatdispersionen von hauptsächlich aus Acrylestern in polymerisierter Form aufgebauten Polymerisaten bekannt, die nach der Methode der radikalischen wäßrigen Emulsionspolymerisation in zwei Stufen erhältlich sind, wobei die in der ersten Stufe angewandte Monomerenzusammensetzung für sich zu einem Polymerisat mit einer Glasübergangstemperatur unterhalb -20°C und die in der zweiten Stufe angewandte Monomerenzusammensetzung für sich zu einem Polymerisat mit einer Glasübergangstemperatur im Bereich von 60 bis -10°C führen würde. Die so erhältlichen wäßrigen Polymerisatdispersionen werden u.a. zum Behandeln von Leder empfohlen. Nachteilig an diesen Polymerisatdispersionen ist jedoch, daß bei ihrer Anwendung auf Leder Schutzschichten resultieren, die sowohl hinsichtlich ihrer Trocken- und Naßbruchfestigkeit, als auch insbesondere bezüglich ihrer Kältebruchfestigkeit nicht zu befriedigen vermögen.

Die EP-A 384 235 betrifft wäßrige Polymerisatdispersionen die ebenfalls durch zweistufige radikalische wäßrige Emulsionspolymerisation erhältlich sind, wobei man in der ersten Stufe wenigstens die Hälfte eines Monomerengemisches aus Butadien und monoethylenisch ungesättigten Verbindungen bis zu einem Umsatz von 80 % vorpolymerisiert und in der zweiten Stufe die Polymerisation unter Zugabe des Restes dieses Monomerengemisches sowie unter Zugabe weiterer monoethylenisch ungesättigter Monomere fortsetzt. Die so erhältlichen wäßrigen Polymerisatdispersionen werden als Bindemittel für Schutzschichten auf Leder sowohl mit erhöhter Trocken- und Näßbruchfestigkeit, als auch mit erhöhter Kältebruchfestigkeit empfohlen. Nachteilig an diesen wäßrigen Polymerisatdispersionen ist jedoch, daß die mit ihnen erzeugten Schutzschichten unter dem Einfluß von Licht, Sauerstoff und/oder Wärme hinsichtlich ihrer Alterung nicht zu befriedigen vermögen (mangelnde Echtheit), was insbesondere bei im Automobilbereich zu verwendenden Ledern von Nachteil ist.

Die US-A 3 057 812 betrifft wäßrige Polymerisatdispersionen auf der Basis von Acrylsäureesterpolymerisaten deren Glas- übergansgstemperatur wenigstens 45°C beträgt. Die bevorzugte Polymerisationstemperatur beträgt 60 bis 90°C. Verfilmungen solcher wäßrigen Polymerisatdispersionen sind bereits auf- grund ihrer Härte als Lederschutzschicht ungeeignet.

Der vorliegenden Erfindung lag daher die Aufgabe zugrunde, den geschilderten Nachteilen mittels wäßriger Polymerisatdispersionen abzuhelfen, die insbesondere als Bindemittel für Schutzschichten auf Leder geeignet sind. Demgemäß wurden die eingangs definierten wäßrigen Polymerisatdispersionen gefunden.

Als nicht 2-Ethylhexylacrylat seiende Monomere a eignen sich insbesondere Methylacrylat, Ethylacrylat, n-Butylacrylat, iso-Butylacrylat und n-Butylmethacrylat, unter welchen Ethylacrylat, n-Butylacrylat und n-Butylmethacrylat besonders bevorzugt sind. Als Monomere b kommen vorzugsweise Acrylsäure, Methacrylsäure, Itaconsäure, Maleinsäure, Fumarsäure, Acrylamid und Methacrylamid in Betracht, wobei Acrylsäure und Acrylamid besonders vorteilhaft sind. Geeignete Monomere c sind u.a. Acrylnitril, Methacrylnitril, vinylaromatische Verbindungen wie Styrol, am aromatischen Ring $C_1$- bis $C_4$-Alkylreste aufweisende Styrolderivate wie o-, m- und p-Methylstyrol, $\alpha$-Alkyl ($C_1$- bis $C_4$-) styrole wie $\alpha$-Methylstyrol, Vinylhalogenide wie Vinylchlorid oder Vinylidenchlorid, Ester aus Vinylalkohol und niederen Alkancarbonsäuren wie Vinylformiat, Vinylacetat und Vinylpropionat, ungesättigte Sulfonsäuren wie Vinylsulfonsäure oder deren Alkalimetallsalze sowie Hydroxyalkylacrylate und -methacrylate wie 3-Hydroxypropylacrylat, 2-Hydroxyethylacrylat, 3-Hydroxypropylmethacrylat und 2-Hydroxyethylmethacrylat. Besonders geeignete Monomere c sind Acrylnitril, Styrol und Vinylsulfonsäure oder deren Alkalimetallsalze, wobei die Vinylsulfonsäure bzw. deren Salze vorzugsweise in Mengen, bezogen auf die Masse der Gesamtmischung A, von ≤5 Gew.-% miteinpolymerisiert wird.

Ganz besonders bevorzugte Monomerengemische A bestehen aus

| | |
|---|---|
| 74 bis 91 Gew.-% | Ethylacrylat, n-Butylmethacrylat, n-Butylacrylat oder deren Gemisch, |
| 5 bis 22 Gew.-% | 2-Ethylhexylacrylat, |
| 2 bis 4 Gew.-% | Acrylamid, Acrylsäure oder deren Gemisch und |
| 0 bis 1 Gew.-% | Na-Salz der Vinylsulfonsäure. |

Aus dem ebenda gegebenen Raster möglicher Monomerenzusammensetzungen A muß A in allen Fällen so gewählt werden, daß ein nur aus den darin enthaltenen Monomeren a und c in polymerisierter Form aufgebautes Polymerisat eine Glasübergangstemperatur im Bereich ≤0 bis ≥-30°C aufweisen würde.

Nach Fox (T.G. Fox, Bull.Am.Phys.Soc. (Ser.II) $\underline{1}$, 123 (1956)) gilt für die Glasübergangstemperatur von Mischpolymerisaten in guter Näherung:

$$\frac{1}{Tg} = \frac{X^1}{Tg^1} + \frac{X^2}{Tg^2} + ... \frac{X^n}{Tg^n} ,$$

wobei $X^1$, $X^2$, ..., $X^n$ die Massenbrüche der Monomeren 1, 2, ..., n und $Tg^1$, $Tg^2$, ..., $Tg^n$ die Glasübergangstemperaturen der jeweils nur aus einem der Monomeren 1, 2, ... oder n aufgebauten Polymerisate in Grad Kelvin bedeuten.

Die Glasübergangstemperaturen dieser Homopolymerisate der oben aufgeführten Monomeren a, c sind bekannt und z.B. in J. Brandrup, E.H. Immergut, Polymer Handbook 1st Ed. J. Wiley, New York 1966 und 2nd Ed. J. Wiley, New York 1975, aufgeführt.

Die Herstellung der erfindungsgemäßen wäßrigen Polymerisatdispersionen erfolgt durch Polymerisation der jeweiligen Monomerengemische A in wäßrigem Medium unter den an sich bekannten Bedingungen der radikalischen wäßrigen Emulsionspolymerisation in Gegenwart von wasserlöslichen radikalbildenden Initiatoren und Dispergiermitteln sowie gegebenenfalls in Gegenwart von das Molekulargewicht der Polymerisate regelnden Mitteln, Puffersubstanzen oder anderen üblichen Hilfsmitteln. Die Emulsionspolymerisation ist sowohl als Batchprozeß als auch als Zulaufverfahren durchführbar. Bevorzugt ist das Zulaufverfahren, bei dem man einen vorgelegten Teil des Polymerisationsansatzes auf die Polymerisationstemperatur erwärmt und anschließend den Rest, der vorzugsweise die Gesamtmenge der zu polymerisierenden Monomeren umfaßt, unter Aufrechterhaltung der Polymerisation kontinuierlich zuführt. Dabei können die Monomeren in reiner oder in emulgierter Form zugeführt werden. Die Zufuhr der Monomeren als wäßrige Emulsion ist bevorzugt.

Als wasserlösliche Polymerisationsinitiatoren kommen alle diejenigen in Betracht, die im erfindungsgemäß relevanten Temperaturbereich in der Lage sind, eine radikalische wäßrige Emulsionspolymerisation auszulösen. Es kann sich dabei sowohl um Peroxide wie-Alkalimetall- oder Ammoniumperoxidisulfat, Wasserstoffperoxid, tert.-Butylhydroperoxid oder tert.-Butylperbenzoat als auch um Azoverbindungen handeln. Bezogen auf die Gesamtmenge der zu polymerisierenden Monomeren beträgt ihre Einsatzmenge in der Regel 0,02 bis 3, vorzugsweise 0,05 bis 1,0 Gew.-%. Mit Vorteil werden kombinierte Systeme, die aus wenigstens einem organischen Reduktionsmittel und wenigstens einem Peroxid und/oder Hydroperoxid zusammengesetzt sind, angewendet. Als Beispiele solcher Reduktionsmittel seien Schwefeldioxid, Thiosulfat, Dithionit, Hydrazinsulfat, Glucose, Ascorbinsäure und die Alkalimetallsalze der Hydroxymethansulfinsäure genannt. Ganz besonders bevorzugt sind kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. das Natriumsalz der Hydroxymethansulfinsäure/Eisen(II)sulfat/Alkalimetall- und/oder Ammoniumperoxidisulfat, das ein besonders bevorzugtes Initiatorsystem repräsentiert. Häufig wird auch eine Kombination aus wasserlöslichen Fe/V-Salzen verwendet.

Als Dispergiermittel haben sich sowohl Schutzkolloide als auch Emulgatoren, insbesondere Alkalimetallsalze der Schwefelsäurehalbester von gesättigten und ungesättigten Fettalkoholen ($C_{12}$ bis $C_{20}$), bewährt. Als weitere geeignete Emulgatoren seien z.B. die Alkalimetallsalze von Alkylsulfonsäuren ($C_{12}$ bis $C_{18}$), von Schwefelsäurehalbestern ethoxylierter Alkylphenole (EO-Grad: 3 bis 30, Alkylrest: $C_8$ bis $C_{10}$) sowie ethoxylierte Fettalkohole (EO-Grad: 5 bis 50, Alkylrest: $C_8$ bis $C_{25}$) und ethoxylierte Alkylphenole (EO-Grad: 3 bis 30, Alkylrest: $C_8$ bis $C_{10}$) genannt. Bezogen auf die Gesamtmenge der zu polymerisierenden Monomeren werden im Verlauf der erfindungsgemäßen radikalischen wäßrigen Emulsionspolymerisation in der Regel 0,2 bis 3, vorzugsweise 0,5 bis 2 Gew.-% an Dispergiermitteln eingesetzt. Nach beendeter Polymerisation können gegebenenfalls weitere Dispergiermittel zugesetzt werden, um die resultierende wäßrige Polymerisatdispersion zusätzlich zu stabilisieren. Vorzugsweise erfolgt die erfindungsgemäße radikalische wäßrige Emulsionspolymerisation in Gegenwart von Dispergiermitteln, die wenigstens zu 50 Gew.-% aus Alkalimetallsalzen der Schwefelsäurehalbester von gesättigten und ungesättigten Fettalkoholen ($C_{12}$ bis $C_{20}$) bestehen. In ganz

besonders vorteilhafter Weise werden die Alkalimetallsalze dieser Schwefelsäurehalbester für sich eingesetzt.

Vorzugsweise erfolgt die erfindungsgemäße Emulsionspolymerisation in einem Polymerisationsmedium, das einen pH-Wert von 2 bis 10, vorzugsweise 3 bis 9 aufweist. In der Regel erweist sich diesbezüglich die Mitverwendung von Puffersubstanzen wie Tetranatriumdiphosphat oder Ammoniumionen enthaltenden Verbindungen als vorteilhaft.

Kettenübertragungsmittel wie Tetrabrommethan oder höhere Alkylmercaptane wie tert.-Dodecylmercaptan lassen sich bei der erfindungsgemäßen Polymerisation ebenfalls mitverwenden. Es sind so erfindungsgemäße Polymerisate erhältlich, deren gewichtsmittleres Molekulargewicht üblicherweise im Bereich $M_w$ von $3 \cdot 10^5$ bis $10^6$ liegt. Der Feststoffgehalt der erfindungsgemäßen wäßrigen Polymerisatdispersionen ist von untergeordneter Bedeutung. Zweckmäßigerweise liegt er bei 30 bis 60 Gew.-%.

Die Verfilmungen der erfindungsgemäßen wäßrigen Polymerisatdispersionen weisen in bemerkenswerter Weise eine erhöhte Elastizität bei gleichzeitig reduzierter Oberflächenklebrigkeit auf. Sie eignen sich daher insbesondere als Bindemittel zur Herstellung von Schutzschichten auf Leder, wobei diese Schutzschichten sowohl durch eine erhöhte Trocken- und Naßknickfestigkeit, als auch insbesondere eine erhöhte Kältebruchfestigkeit charakterisiert sind. Ferner weisen sie erhöhte Echtheiten gegenüber Einwirkung von Licht, Sauerstoff und/oder Wärme auf. Ihre Anwendung kann sowohl auf vollnarbigem oder geschliffenem Leder, als auch auf Spaltledern oder Lederfasermaterialien sowie Kunstleder erfolgen. Gewöhnlich werden sie mit einem Feststoffgehalt von 15 bis 40 Gew.-% eingesetzt. Darüberhinaus eignen sich die erfindungsgemäßen wäßrigen Polymerisatdispersionen aber auch zur Herstellung von Tauchartikeln, z.B. Gummihandschuhe, sowie als Bindemittel anderer üblicher Massen zum Beschichten, z.B. Anstrichfarben oder Putze.

Modischen Erfordernissen entsprechend werden Lederschutzschichten im allgemeinen farbig aufgebracht. Hierzu werden in der Regel in die als Bindemittel dienenden Polymerisatdispersionen wäßrige Pigmentzubereitungen eingerührt, die normalerweise als wesentliche Bestandteile Wasser, feinteilige Pigmente, die anorganischer oder organischer Herkunft sein können (z.B. Eisenoxid, Titandioxid, Azopigmente, Phthalocyanine oder Ruß), Dispergiermittel sowie gegebenenfalls Verdicker wie Casein, thermoplastische oder nichtthermoplastische Bindemittel sowie weitere Hilfsmittel wie Konservierungsstoffe enthalten.

Die so erhältlichen farbigen Lederschutzzubereitungen werden üblicherweise durch Gieß-, Rakel-, Streich-, Spritz-, Bürst- oder Plüschverfahren auf die Leder aufgebracht. Im allgemeinen wird zunächst eine Grundschutzschicht aufgetragen, auf die nach Zwischenbügeln ein Deckauftrag derselben Zusammensetzung aufgebracht wird. Nach erfolgter Trocknung der Deckschicht eignen sich unter anderem Nitrocellulose oder andere Celluloseester als Bindemittel enthaltende Appreturen, um der Schutzschicht die gewünschte Glanzstufe zu verleihen.

Beispiele

Beispiel 1

Herstellung erfindungsgemäßer wäßriger Polymerisatdispersionen Da) und Db)

```
Da): Ein Gemisch aus  900 g   Wasser
                      20,8 g   des Na-Salzes eines Gemisches
                               von Schwefelsäurehalbestern
                               gesättigter und ungesättigter
                               Fettalkohole (C₁₆ bis C₁₈)
                       2,8 g   des Na-Salzes der Hydroxyme-
                               thansulfinsäure und


                       1,2 g   einer 1 gew.-%igen wäßrigen
                               Lösung von (NH₄)₂Fe(SO₄)₂·6 H₂O
                               (Mohrsches Salz)
```

wurde auf 45°C erwärmt und zeitgleich beginnend kontinuierlich mit Zulauf I (während 3 h) und Zulauf II (während 3,5 h) versetzt. Nach Beendigung von Zulauf II wurde das Reaktionsgemisch noch 1 h bei 45°C gehalten und danach auf 25°C abgekühlt. Abschließend wurden 8,8 g einer 35 gew.-%igen wäßrigen Lösung der Na-Salzes des Schwefelsäurehalbesters von ethoxyliertem Isooctylphenol (EO-Grad: 25) und 7 g einer 10 gew.-%igen wäßrigen Lösung des Na-Salzes der Hydroxymethansulfinsäure zugesetzt. Die so erhältliche wäßrige Polymerisatdispersion wies einen Feststoffgehalt von 39,4 Gew.-% auf.

| Zulauf I : | 639,1 g | Wasser |
|---|---|---|
| | 4,8 g | Tetranatriumpyrophosphat |
| | 107,2 g | Na-Salz eines Gemisches von Schwefelsäurehalbestern gesättigter und ungesättigter Fettalkohole ($C_{16}$ bis $C_{18}$) |
| | 2,4 g | Na-Salz der Vinylsulfonsäure |
| | 12 g | Acrylamid |
| | 36 g | Acrylsäure |
| | 1032 g | Ethylacrylat |
| | 120 g | 2-Ethylhexylacrylat |
| | | |
| Zulauf II : | 200 g | Wasser |
| | 2,8 g | Natriumperoxidisulfat |

Db): Wie Da), die Zusammensetzung des Monomerengemisches A war jedoch:

| 12 g | Acrylamid |
|---|---|
| 36 g | Acrylsäure |
| 888 g | n-Butylmethacrylat |
| 264 g | 2-Ethylhexylacrylat |
| 2,4 g | Na-Salz der Vinylsulfonsäure |

Der Feststoffgehalt der so erhältlichen wäßrigen Polymerisatdispersion betrug 39,2 Gew.-%.

Beispiel 2

Prüfung verschiedener Lederschutzschichten

100 g einer wäßrigen handelsüblichen Pigmentzubereitung, die als wesentliche Bestandteile 12 Gew.-% feinteiligen Ruß, 85 Gew.-% Wasser und 2,5 Gew.-% Dispergiermittel enthielt, wurden gemeinsam mit 400 g Wasser in jeweils 300 g der auf einen Feststoffgehalt von 39 Gew.-% eingestellten Polymerisatdispersionen Da) und Db) aus Beispiel 1 eingearbeitet. Die erhaltenen Zubereitungen wurden in je zwei Aufträgen (1. Auftrag: 24,5 g/m$^2$ Trockenmasse; 2. Auflage: 18,5 g/m$^2$ Trockenmasse) auf chromgegerbtes Rindboxleder aufgespritzt. Nach Lufttrocknung wurde gebügelt (80°C/100 bar) und eine Nitrocellulose als Bindemittel enthaltende Appretur (200 g Nitrocellulose in 100 g Wasser) aufgetragen.

Von den so hergestellten Lederschutzschichten wurde anschließend nach den Methoden der Internationalen Union der Leder-Chemiker-Verbände (I.U.P-Methoden) die Kältebruchfestigkeit, Trockenknickfestigkeit (50 000 Knickungen mit einem Bally-Flexometer) und die Naßknickfestigkeit (25 000 Knickungen mit einem Bally-Flexometer) bestimmt. Dabei erfolgte die Bestimmung der Kältebruchfestigkeit wie folgt: ein Prüfling aus beschichtetem Leder (7 cm x 4,5 cm) wurde in einem Kälteschrank bei -20°C mit einem Bally-Flexometer 10 000 mal geflext. Danach wurde mit einer Lupe (8fache Vergrößerung) die Biegefalte auf Bruch geprüft.

Die Ergebnisse enthält die Tabelle in Form von Benotungen auf einer Skala von 1 (sehr gut) bis 6 (mangelhaft).

Darüber hinaus gibt die Tabelle über die Heißlichtalterung der Lederbeschichtungen Auskunft, deren Prüfung gemäß DIN 75 202 erfolgte, wobei die Bewertung nach der Wollblauskala (DIN 54 001) durchgeführt wurde. Einem zunehmenden Wert der Bewertungszahl entspricht hier eine Zunahme der Heißlichtechtheit. Zusätzlich weist die Tabelle die Ergebnisse von drei Vergleichsversuchen aus, im Rahmen derer als Bindemittel jeweils auf 39 Gew.-% Feststoffgehalt verdünnte wäßrige Polymerisatdispersionen gemäß Bsp. 1 der DE-A 27 26 806 (DVa)) bzw. gemäß Bsp. 1/B1 der EP-A-384 235 (DVb)) bzw. gemäß Da) aus Beispiel 1, jedoch bei 65°C anstelle von 45°C polymerisiert, (DVc)) verwendet wurden.

| Tabelle | Da) | Db) | DVa) | DVb) | DVc) |
|---|---|---|---|---|---|
| Trockenknickfestigkeit | 1 | 1 | 6 | 1 | 6 |
| Naßknickfestigkeit | 2 | 2 | 6 | 1 | 2 |
| Kältebruchfestigkeit | 1 | 1 | 6 | 1 | 3 |
| Heißlichtechtheit | 6-7 | 6-7 | 6-7 | 1-2* | 6-7 |

* Das hier eingesetzte Bindemittel enthielt bereits 0,5 Gew.-%, bezogen auf den Feststoffgehalt, der handelsüblichen, die Heißlichtechtheit verbessernden Mittels Wingstay® L, der Fa. Goodyear.

**Patentansprüche**

1. Wäßrige Polymerisatdispersion, dadurch erhältlich, daß man eine Mischung A radikalisch polymerisierbarer Monomere, bestehend aus

   a) 65 bis 99 Gew.%      wenigstens einer Monomerenmischung a, die ihrerseits aus

   50 bis 95 Gew.-%      wenigstens eines Esters aus der Gruppe umfassend die Ester der Acryl- und Methacrylsäure mit 1 bis 8 C-Atome enthaltenden Alkanolen, ausschließlich 2-Ethylhexylacrylat, und

   5 bis 50 Gew.-%      2-Ethylhexylacrylat zusammengesetzt ist,

   b) 1 bis 10 Gew.-%      wenigstens eines Monomeren aus der Gruppe umfassend 3 bis 8 C-Atome aufweisende $\alpha,\beta$-monoethylenisch ungesättigte Mono- und Dicarbonsäuren, deren Anhydride und deren Mono- sowie Diamide (Monomere b) und

   c) 0 bis 25 Gew.-%      sonstigen radikalisch copolymerisierbaren Monomeren (Monomere c),

   nach der Methode der radikalischen wäßrigen Emulsionspolymerisation mit der Maßgabe polymerisiert, daß die Polymerisationstemperatur im Bereich ≥0 bis ≤50°C liegt und die Zusammensetzung der Monomerenmischung A so gewählt wird, daß ein nur aus den darin enthaltenen Monomeren a und c in polymerisierter Form aufgebautes Polymerisat eine Glasübergangstemperatur im Bereich ≤0 bis ≥-30°C aufweisen würde.

2. Wäßrige Polymerisatdispersionen nach Anspruch 1, dadurch erhältlich, daß die radikalische wäßrige Emulsionspolymerisation in Gegenwart von Dispergiermitteln erfolgt, die wenigstens einen Schwefelsäurehalbester eines gesättigten oder ungesättigten $C_{12}$- bis $C_{20}$-Fettalkohols und/oder dessen Alkalimetallsalz enthalten.

3. Wäßrige Polymerisatdispersionen nach Anspruch 1 oder 2, dadurch erhältlich, daß die radikalische wäßrige Emulsionspolymerisation im Beisein des Initiatorsystems Hydroxymethansulfinsäure/Eisen (II) sulfat/Alkalimetall- und/oder Ammoniumperoxidisulfat erfolgt.

4. Verfahren zur Herstellung wäßriger Polymerisatdispersionen gemäß Anspruch 1, dadurch gekennzeichnet, daß man eine Mischung A radikalisch polymerisierbarer Monomere, bestehend aus

   a) 65 bis 99 Gew.%      wenigstens einer Monomerenmischung a, die ihrerseits aus

   50 bis 95 Gew.-%      wenigstens eines Esters aus der Gruppe umfassend die Ester der Acryl- und Methacrylsäure mit 1 bis 8 C-Atome enthaltenden Alkanolen, ausschließlich 2-Ethylhexylacrylat, und

   5 bis 50 Gew.-%      2-Ethylhexylacrylat zusammengesetzt ist,

b) 1 bis 10 Gew.-%   wenigstens eines Monomeren aus der Gruppe umfassend 3 bis 8 C-Atome aufweisende α,β-monoethylenisch ungesättigte Mono- und Dicarbonsäuren, deren Anhydrid und deren Mono- sowie Diamide (Monomere b) und

c) 0 bis 25 Gew.-%   sonstigen radikalisch copolymerisierbaren Monomeren (Monomere c),

nach der Methode der radikalischen wäßrigen Emulsionspolymerisation mit der Maßgabepolymerisiert, daß die Polymerisationstemperatur im Bereich ≥0 bis ≤50°C liegt und die Zusammensetzung der Monomerenmischung A so gewählt wird, daß ein nur aus den darin enthaltenen Monomeren a und c in polymerisierter Form aufgebautes Polymerisat eine Glasübergangstemperatur im Bereich ≤0 bis ≥-30°C aufweisen würde.

5. Verfahren nach Anspruch 4, dadurch gekennzeichnet, daß die radikalische wäßrige Emulsionspolymerisation in Gegenwart von Dispergiermitteln erfolgt, die wenigstens einen Schwefelsäurehalbester eines gesättigten oder ungesättigten $C_{12}$- bis $C_{20}$-Fettalkohols und/oder dessen Alkalimetallsalz enthalten.

6. Verfahren nach den Ansprüchen 4 oder 5, dadurch gekennzeichnet, daß die radikalische wäßrige Emulsionspolymerisation im Beisein des Initiatorsystems Hydroxymethansulfinsäure/Eisen(II)sulfat/Alkalimetall- und/oder Ammoniumperoxidisulfat erfolgt.

7. Verwendung wäßriger Polymerisatdispersionen gemäß den Ansprüchen 1 bis 3 als Bindemittel in Massen zum Beschichten.

8. Verwendung wäßriger Polymerisatdispersionen gemäß den Ansprüchen 1 bis 3 als Bindemittel in Massen zum Beschichten von Leder.

9. Tauchartikel, hergestellt aus wäßrigen Polymerisatdispersionen gemäß Anspruch 1.

**Claims**

1. An aqueous polymer dispersion, obtainable by polymerizing a mixture A of monomers which can be subjected to free radical polymerization, consisting of

   a) from 65 to 99% by weight of at least one monomer mixture a which in turn consists of
   from 50 to 95% by weight of at least one ester selected from the group consisting of the esters of acrylic and methacrylic acid with alkanols of 1 to 8 carbon atoms, excluding 2-ethylhexyl acrylate, and
   from 5 to 50% by weight of 2-ethylhexyl acrylate,
   b) from 1 to 10% by weight of at least one monomer selected from the group consisting of α,β-monoethylenically unsaturated mono- and dicarboxylic acids of 3 to 8 carbon atoms, anhydrides thereof and mono- and diamides thereof (monomer b) and
   c) from 0 to 25% by weight of other monomers which can be subjected to free radical copolymerization (monomer c),

   by the method of free radical aqueous emulsion polymerization, with the proviso that the polymerization temperature is from ≥ 0 to ≤ 50°C and the composition of monomer mixture A is chosen so that a polymer consisting only of the monomers a and c present therein in polymerized form would have a glass transition temperature of ≤ 0 to ≥ -30°C.

2. An aqueous polymer dispersion as claimed in claim 1, obtainable by carrying out the free radical aqueous emulsion polymerization in the presence of dispersants which contain at least one sulfuric half-ester of a saturated or unsaturated $C_{12}$-$C_{20}$-fatty alcohol and/or an alkali metal salt thereof.

3. An aqueous polymer dispersion as claimed in claim 1 or 2, obtainable by carrying out the free radical aqueous emulsion polymerization in the presence of the initiator system hydroxymethanesulfinic acid/iron(II) sulfate/alkali metal and/or ammonium peroxydisulfate.

4. A process for the preparation of an aqueous polymer dispersion as claimed in claim 1, wherein a mixture A of monomers which can be subjected to free radical polymerization, consisting of

a) from 65 to 99% by weight of at least one monomer mixture a which in turn consists of
from 50 to 95% by weight of at least one ester selected from the group consisting of the esters of acrylic and methacrylic acid with alkanols of 1 to 8 carbon atoms, excluding 2-ethylhexyl acrylate, and
from 5 to 50% by weight of 2-ethylhexyl acrylate,
b) from 1 to 10% by weight of at least one monomer selected from the group consisting of $\alpha,\beta$-monoethylenically unsaturated mono- and dicarboxylic acids of 3 to 8 carbon atoms, anhydrides thereof and mono- and diamides thereof (monomer b) and
c) from 0 to 25% by weight of other monomers which can be subjected to free radical copolymerization (monomer c),

is polymerized by the method of free radical aqueous emulsion polymerization, with the proviso that the polymerization temperature is from $\geq 0$ to $\leq 50°C$ and the composition of monomer mixture A is chosen so that a polymer consisting only of the monomers a and c present therein in polymerized form would have a glass transition temperature of $\leq 0$ to $\geq -30°C$.

5. A process as claimed in claim 4, wherein the free radical aqueous emulsion polymerization is carried out in the presence of dispersants which contain at least one sulfuric half-ester of a saturated or unsaturated $C_{12}$-$C_{20}$-fatty alcohol and/or an alkali metal salt thereof.

6. A process as claimed in claim 4 or 5, wherein the free radical aqueous emulsion polymerization is carried out in the presence of the initiator system hydroxymethanesulfinic acid/iron(II) sulfate/alkali metal and/or ammonium peroxydisulfate.

7. The use of an aqueous polymer dispersion as claimed in any of claims 1 to 3 as a binder in materials for coating.

8. The of an aqueous polymer dispersion as claimed in any of claims 1 to 3as a binder in materials for coating leather.

9. Immersed article produced from an aqueous polymer dispersion as claimed in claim 1.

## Revendications

1. Dispersion aqueuse de polymère, obtenue en polymérisant, par le procédé de la polymérisation radicalaire en émulsion aqueuse, un mélange A de monomères susceptibles de polymérisation radicalaire, se composant de

a) 65 à 99% en poids d'au moins un mélange de monomères a qui est composé de son côté de
50 à 95% en poids d'au moins un ester du groupe comprenant les esters des acides acrylique et méthacrylique avec des alcanols contenant 1 à 8 atomes de carbone, à l'exclusion de l'acrylate de 2-éthylhexyle, et de
5 à 50% en poids d'acrylate de 2-éthylhexyle,
b) 1 à 10% en poids d'au moins un monomère du groupe comprenant les acides mono- et dicarboxyliques à insaturation $\alpha,\beta$-monoéthylénique renfermant 3 à 8 atomes de carbone, leurs anhydrides et leurs mono- et diamides (monomère b), et
c) 0 à 25% en poids d'autres monomères susceptibles de copolymérisation radicalaire (monomère c),

étant spécifié que la température de polymérisation se situe dans la gamme de $\geq 0$ à $\leq 50°C$ et que la composition du mélange de monomères A est choisie de telle sorte qu'un polymère composé seulement, sous forme polymérisée, des monomères a et c qui sont contenus dans ce mélange présenterait une température de transition vitreuse dans la gamme de $\leq 0$ à $\geq -30°C$.

2. Dispersions aqueuses de polymère selon la revendication 1, obtenues en effectuant la polymérisation radicalaire en émulsion aqueuse en présence d'agents de dispersion qui contiennent au moins un semi-ester d'acide sulfurique et d'un alcool gras en $C_{12}$-$C_{20}$ saturé ou insaturé et/ou un sel de métal alcalin de celui-ci.

3. Dispersions aqueuses de polymère selon la revendication 1 ou 2, obtenues en effectuant la polymérisation radicalaire en émulsion aqueuse en présence du système amorceur acide hydroxyméthanesulfinique/sulfate ferreux/peroxodisulfate de métal alcalin et/ou d'ammonium.

4. Procédé de préparation de dispersions aqueuses de polymère selon la revendication 1, caractérisé en ce que l'on polymérise, par le procédé de la polymérisation radicalaire en émulsion aqueuse, un mélange A de monomères susceptibles de polymérisation radicalaire, se composant de

    a) 65 à 99% en poids d'au moins un mélange de monomères a qui est composé de son côté de
        50 à 95% en poids d'au moins un ester du groupe comprenant les esters des acides acrylique et méthacrylique avec des alcanols contenant 1 à 8 atomes de carbone, à l' exclusion de l'acrylate de 2-éthylhexyle, et de
        5 à 50% en poids d'acrylate de 2-éthylhexyle,
    b) 1 à 10% en poids d'au moins un monomère du groupe comprenant les acides mono- et dicarboxyliques à insaturation $\alpha,\beta$-monoéthylénique renfermant 3 à 8 atomes de carbone, leurs anhydrides et leurs mono- et diamides (monomère b), et
    c) 0 à 25% en poids d'autres monomères susceptibles de copolymérisation radicalaire (monomère c),

étant spécifié que la température de polymérisation se situe dans la gamme de $\geq 0$ à $\leq 50°C$ et que la composition du mélange de monomères A est choisie de telle sorte qu'un polymère composé seulement, sous forme polymérisée, des monomères a et c qui sont contenus dans ce mélange présenterait une température de transition vitreuse dans la gamme de $\leq 0$ à $\geq -30°C$.

**5.** Procédé selon la revendication 4, caractérisé en ce que la polymérisation radicalaire en émulsion aqueuse est effectuée en présence d'agents de dispersion qui contiennent au moins un semi-ester d'acide sulfurique et d'un alcool gras en $C_{12}$-$C_{20}$ saturé ou insaturé et/ou un sel de métal alcalin de celui-ci.

**6.** Procédé selon la revendication 4 ou 5, caractérisé en ce que la polymérisation radicalaire en émulsion aqueuse est effectuée en présence du système amorceur acide hydroxyméthanesulfinique/sulfate ferreux/ peroxodisulfate de métal alcalin et/ou d'ammonium.

**7.** Utilisation de dispersions aqueuses de polymère selon l'une quelconque des revendications 1 à 3 comme liants dans des masses pour l'enduction.

**8.** Utilisation de dispersions aqueuses de polymère selon l'une quelconque des revendications 1 à 3 comme liants dans des masses pour l'enduction de cuir.

**9.** Articles de plongée, fabriqués à partir de dispersions aqueuses de polymère selon la revendication 1.